# FASCICULE DE BREVET EUROPEEN

(11) **EP 2 100 799 B1**
(45) Date de publication et mention de la délivrance du brevet: **16.02.2011**
(21) Numéro de dépôt: 09153161.6
(22) Date de dépôt: 19.02.2009
(51) Int. Cl.: B62D 25/08

(54) **Ensemble de canalisation d'eau provenant d'un pare-brise et d'une grille d'auvent d'un véhicule automobile**
Abführsystem für Wasser von der Windschutzscheibe und einem Windlaufgrill eines Kraftfahrzeugs
System for channelling water from a windscreen and a cowl vent grille of an automobile

(30) Priorité: 11.03.2008 FR 0851547
(43) Date de publication de la demande: 16.09.2009
(73) Titulaire: Peugeot Citroën Automobiles S.A., 78140 Vélizy Villacoublay (FR)
(72) Inventeur: Dolo, David, 92140, Clamart (FR); Montauban, Rodolphe, 91290, Arpajon (FR)

(56) Documents cités:
- EP-A- 0 301 494
- EP-A- 1 787 869
- DE-A1-102007 013 690
- DE-C1- 4 303 664

## Description

La présente invention est relative à un ensemble de canalisation d'eau provenant d'un pare-brise et d'une grille d'auvent d'un véhicule automobile.

L'invention concerne également un véhicule automobile équipé d'au moins un tel ensemble de canalisation d'eau.

De manière classique, les véhicules automobiles comportent, entre un pare-brise et un capot de fermeture d'un compartiment moteur, une grille d'auvent ayant notamment pour rôle de capter l'air et de le diriger vers un collecteur d'alimentation d'un système de climatisation du véhicule.

Chaque bord latéral de la grille d'auvent est relié à un élément adjacent de la carrosserie du véhicule au moyen d'un joint d'étanchéité dont le rôle est d'isoler cette grille des bruits.

Afin d'éviter que l'eau de ruissellement provenant du pare-brise s'écoule dans le collecteur d'air, la grille d'auvent comporte au niveau de ses extrémités latérales, un collecteur d'eau et, au-dessous de ce collecteur d'eau, un élément tubulaire permettant d'évacuer l'eau au travers de l'élément adjacent de la carrosserie vers le bas du véhicule, comme cela est décrit dans le document EP1787869-A1.

Ce dispositif nécessite l'implantation et la fixation d'une pièce supplémentaire dans le compartiment moteur ce qui augmente bien évidemment le coût et le temps pour la pose de cette pièce.

L'invention a pour but de proposer un ensemble de canalisation d'eau qui permet par des moyens simples et peu onéreux d'éviter ces inconvénients.

L'invention a donc pour objet un ensemble de canalisation d'eau provenant d'un pare-brise, d'une grille d'auvent et d'un collecteur d'air d'un véhicule automobile, ladite grille d'auvent étant reliée latéralement à un élément de carrosserie du véhicule par un joint d'étanchéité et comportant à proximité de ce joint d'étanchéité, d'une part, une portion ajourée, disposée au-dessus d'un collecteur d'air et, d'autre part, une portion formant collecteur d'eau, le joint d'étanchéité comportant un moyen de guidage de l'eau entre le collecteur d'eau de la grille d'auvent et le fond du collecteur d'air, caractérisé en ce que ladite grille d'auvent comporte également entre sa partie ajourée et le pare-brise, une portion pleine formant un collecteur d'eau, cette portion de la grille d'auvent étant pourvue à son extrémité latérale, d'orifices d'évacuation de l'eau ruisselant du pare-brise,
et en ce que le moyen de guidage de l'eau est formé par un élément tubulaire comportant une extrémité supérieure disposée au-dessous des orifices de la portion de la grille d'auvent et une extrémité inférieure débouchant au niveau du fond du collecteur d'air.

Selon d'autres caractéristiques de l'invention :
- le moyen de guidage de l'eau est formé par un élément tubulaire intégré audit joint d'étanchéité,
- le joint d'étanchéité est réalisé en mousse par moulage,
- l'élément tubulaire est une pièce en matière plastique rapportée et noyée dans la mousse au moment du moulage du joint d'étanchéité,
- l'élément tubulaire est réalisé en mousse par moulage, et
- le joint d'étanchéité et l'élément tubulaire sont réalisés lors d'une même opération de moulage.

L'invention a également pour objet un véhicule automobile du type comportant un pare-brise et une grille d'auvent, caractérisé en ce qu'il comprend au moins un ensemble de canalisation de l'eau provenant du pare-brise et de la grille d'auvent, tel que précédemment mentionné.

D'autres caractéristiques et avantages de l'invention apparaîtront à la lecture de la description qui va suivre, donnée à titre d'exemple et faite en référence aux dessins annexés, sur lesquels :
- la Fig. 1 est une vue partielle schématique et en perspective d'une partie latérale avant d'un véhicule automobile, équipée d'un ensemble de canalisation d'eau, conforme à l'invention, et
- la Fig. 2 est une vue schématique et en perspective d'un joint d'étanchéité latéral d'une grille d'auvent de l'ensemble de canalisation d'eau, conforme à l'invention.

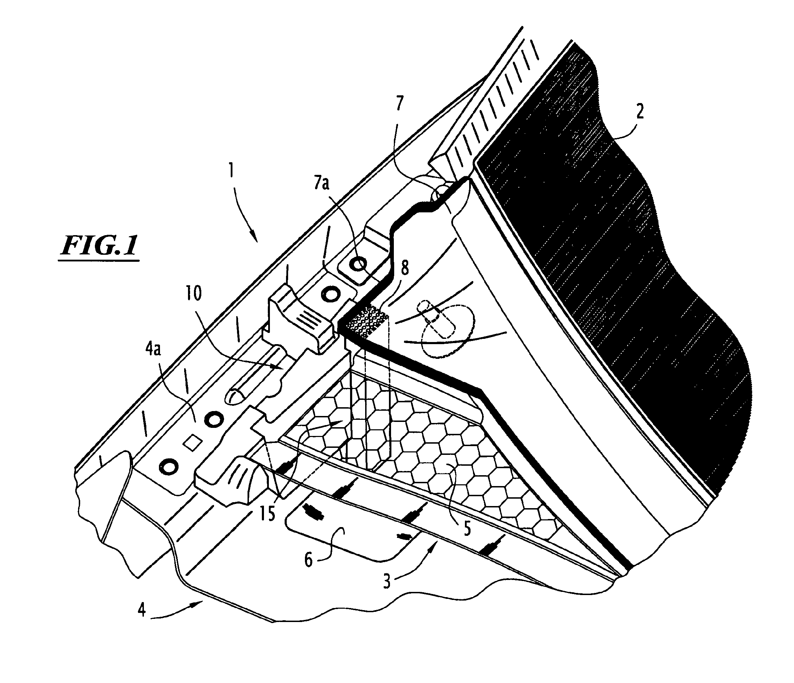

Sur la Fig. 1, on a représenté schématiquement et en perspective une partie latérale avant 1 d'un véhicule automobile.

Cette partie latérale avant 1 comporte, de manière classique, un pare-brise 2 et une grille d'auvent désignée par la référence générale 3. Cette grille d'auvent 3 prolonge la partie inférieure du pare-brise 2 et s'étend entre ledit pare-brise 2 et un capot, non représenté, recouvrant un compartiment moteur 4.

La grille d'auvent 3 est reliée latéralement à un élément de carrosserie du véhicule, comme par exemple une doublure d'aile 4a, par un joint d'étanchéité désigné par la référence 10.

Ce joint d'étanchéité 10 a pour rôle d'isoler la grille d'auvent 3 des bruits. Le joint d'étanchéité 10 est réalisé par exemple en mousse par moulage.

Ainsi que montré à la Fig. 1, la grille d'auvent 3 comporte, à proximité du joint d'étanchéité 10, une portion ajourée 5 disposée au-dessus d'un collecteur d'air 6 permettant d'alimenter un système de climatisation, non représenté pourvu d'un filtre à pollen.

Cette grille d'auvent 3 comporte également entre sa partie ajourée 5 et le pare-brise 2, une portion pleine 7 formant un collecteur d'eau de façon à recueillir l'eau ruisselant du pare-brise 2. A cet effet, la portion 7 de la grille d'auvent 3 est pourvue à son extrémité latérale 7a, d'orifices 8 d'évacuation de l'eau ruisselant du pare-brise 2 lors de fortes pluies ou du lavage du véhicule.

Afin d'éviter que l'eau pénètre dans le système de climatisation, le joint d'étanchéité 10 comporte un moyen de guidage de cette eau entre le collecteur d'eau formé par la portion 7 de la grille d'auvent 3 et le fond du collecteur d'air 6.

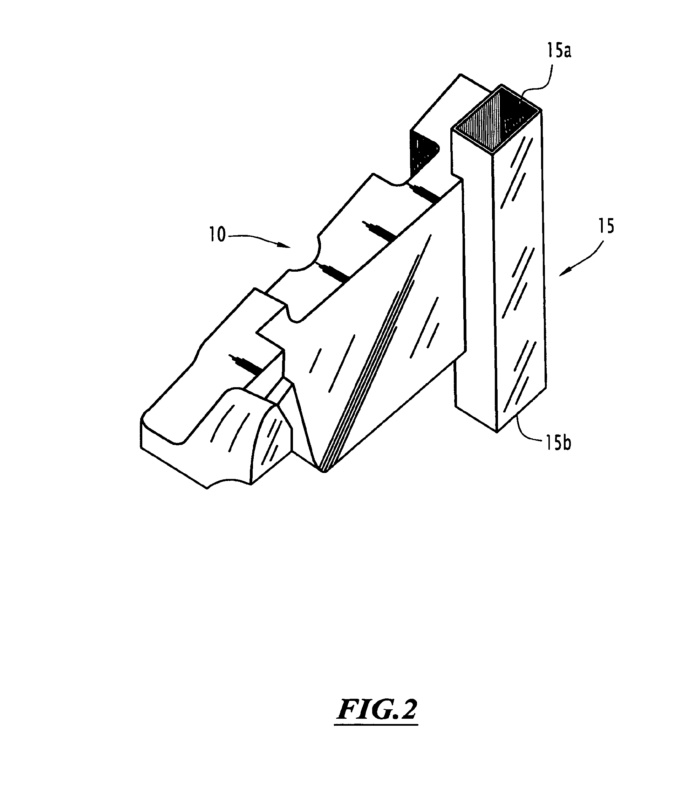

Comme montré notamment à la Fig. 2, le moyen de guidage de l'eau est formé par un élément tubulaire 15 intégré au joint d'étanchéité 10.

Cet élément tubulaire 15 est une pièce en matière plastique rapportée et noyée dans la mousse au moment du moulage du joint d'étanchéité 10.

Selon une variante, l'élément tubulaire 15 est réalisé en mousse par moulage et le joint d'étanchéité 10 et l'élément tubulaire 15 sont réalisés lors d'une même opération de moulage.

Ainsi que représenté à la Fig. 1, l'élément tubulaire 15 comporte une extrémité supérieure 15a disposée au-dessous des orifices 8 de la portion 7 de la grille d'auvent 3 et une extrémité inférieure 15b débouchant au niveau du fond du collecteur d'air 6.

Ainsi, l'eau ruisselant du pare-brise 2 lors d'une pluie importante ou lors du lavage du véhicule, s'écoule sur la portion 7 de la grille d'auvent 3 et passe au travers des orifices 8 ménagés à l'extrémité latérale 7a de cette portion 7 de la grille d'auvent 3.

Ensuite, l'eau est guidée par l'élément tubulaire 15 jusqu'au fond du collecteur d'air 6 afin de l'évacuer à l'extérieur du véhicule permettant ainsi d'éviter les projections d'eau par éclaboussures sur le filtre à pollen, non représenté, du système de climatisation du véhicule automobile.

L'intégration de l'élément tubulaire 15 directement dans la mousse du joint d'étanchéité 10 lors de son moulage permet d'éviter l'implantation dune pièce supplémentaire et de réduire ainsi les coûts.

## Revendications

1. Ensemble de canalisation d'eau provenant d'un pare-brise (2) et d'une grille d'auvent (3) d'un véhicule automobile, ladite grille d'auvent (3) étant reliée latéralement à un élément de carrosserie du véhicule par un joint d'étanchéité (10) et comportant à proximité de ce joint d'étanchéité (10), d'une part, une portion ajourée (5) disposée au-dessus d'un collecteur d'air (6) et, d'autre part, une portion (7) formant un collecteur d'eau, le joint d'étanchéité (10) comportant un moyen (15) de guidage de l'eau entre le collecteur d'eau (7) de la grille d'auvent (3) et le fond du collecteur d'air (6), **caractérisé en ce que** la grille d'auvent (3) comporte également entre sa partie ajourée (5) et le pare-brise (2), une portion pleine (7) formant un collecteur d'eau, cette portion (7) de la grille d'auvent (3) étant pourvue à son extrémité latérale (7a), d'orifices (8) d'évacuation de l'eau ruisselant du pare-brise (2), et **en ce que** le moyen de guidage de l'eau est formé par un élément tubulaire (15) comportant une extrémité supérieure (15a) disposée au dessous des orifices (8) de la portion (7) de grille d'auvent (3) et une extrémité inférieure (15b) débouchant au niveau du fond du collecteur d'air (6).

2. Ensemble selon la revendication 1, **caractérisé en ce que** le moyen de guidage de l'eau est formé par un élément tubulaire (15) intégré audit joint d'étanchéité (10).

3. Ensemble selon la revendication 1 ou 2, **caractérisé en ce que** le joint d'étanchéité (10) est réalisé en mousse par moulage.

4. Ensemble selon la revendication 2 ou 3, **caractérisé en ce que** l'élément tubulaire (15) est une pièce en matière plastique rapportée et noyée dans la mousse au moment du moulage du joint d'étanchéité (10).

5. Ensemble selon la revendication 2 ou 3, **caractérisé en ce que** l'élément tubulaire (15) est réalisé en mousse par moulage.

6. Ensemble selon la revendication 5, **caractérisé en ce que** le joint d'étanchéité (10) et l'élément tubulaire (15) sont réalisés lors d'une même opération de moulage.

7. Véhicule automobile du type comportant un pare-brise (2) et une grille d'auvent (3), **caractérisé en ce qu'**il comprend au moins un ensemble de canalisation d'eau provenant du pare-brise (2) et de la grille d'auvent (3), selon l'une quelconque des revendications précédentes.

## Claims

1. System for channelling water originating from a windscreen (2) and a cowl vent grille (3) of a motor vehicle, the said cowl vent grille (3) being connected laterally to a body element of the vehicle by a tightness joint (10) and comprising close to this tightness joint (10), on the one hand, an openwork portion (5) arranged above an air collector (6) and, on the other hand, a portion (7) forming a water collector, the tightness joint (10) comprising a means (15) for guiding water between the water collector (7) of the cowl vent grille (3) and the base of the air collector (6), **characterized in that** the cowl vent grille (3) also comprises between its openwork part (5) and the windscreen (2) a solid portion (7) forming a water collector, this portion (7) of the cowl vent grille (3) being provided at its lateral end (7a) with orifices (8) for the evacuation of the water running from the windscreen (2), and **in that** the means for guiding the water is formed by a tubular element (15) comprising an upper end (15a) arranged beneath the orifices (8) of the portion (7) of cowl vent grille (3) and a lower end (15b) opening out at the level of the base of the air collector (6).

2. System according to Claim 1, **characterized in that** the means for guiding the water is formed by a tubular element (15) integrated to the said tightness joint (10) .

3. System according to Claim 1 or 2, **characterized in that** the tightness joint (10) is made of foam by moulding.

4. System according to Claim 2 or 3, **characterized in that** the tubular element (15) is a piece of plastic material added and submerged in the foam at the time of moulding the tightness joint (10).

5. System according to Claim 2 or 3, **characterized in that** the tubular element (15) is made of foam by moulding.

6. System according to Claim 5, **characterized in that** the tightness joint (10) and the tubular element (15) are made during the same moulding operation.

7. Motor vehicle of the type comprising a windscreen (2) and a cowl vent grille (3), **characterized in that** it comprises at least one system for channelling water originating from the windscreen (2) and the cowl vent grille (3), according to any one of the preceding claims.

## Patentansprüche

1. Kanalisationseinheit für Wasser, das von einer Windschutzscheibe (2) und einem Windlaufgitter (3) eines Kraftfahrzeugs kommt, wobei das Windlaufgitter (3) seitlich mit einem Karosserieelement des Fahrzeugs durch eine Dichtung (10) verbunden ist und in der Nähe dieser Dichtung (10) einerseits einen durchbrochenen Abschnitt (5) aufweist, der oberhalb eines Luftsammlers (6) angeordnet ist, und, andererseits, einen Abschnitt (7), der einen Wassersammler bildet, wobei die Dichtung (10) ein Mittel (15) zum Führen des Wassers zwischen dem Wassersammler (7) des Windlaufgitters (3) und dem Grund des Luftsammlers (6) aufweist, **dadurch gekennzeichnet, dass** das Windlaufgitter (3) auch zwischen seinem durchbrochenen Teil (5) und der Windschutzscheibe (2) einen massiven Abschnitt (7) aufweist, der einen Wassersammler bildet, wobei dieser Abschnitt (7) des Windlaufgitters (3) an seinem seitlichen Ende (7a) mit Öffnungen (8) zum Ableiten des Wassers versehen ist, das von der Windschutzscheibe (2) rieselt, und dass das Führungsmittel des Wassers aus einem röhrenförmigen Element (15) gebildet ist, das ein oberes Ende (15a) aufweist, das unterhalb der Öffnungen (8) des Abschnitts (7) des Windlaufgitters (3) angeordnet ist, und ein unteres Ende (15b), das auf dem Niveau des Grunds des Luftsammlers (6) mündet.

2. Einheit nach Anspruch 1, **dadurch gekennzeichnet, dass** das Führungsmittel des Wassers aus einem röhrenförmigen Element (15), das in die Dichtung (10) integriert ist, besteht.

3. Einheit nach Anspruch 1 oder 2, **dadurch gekennzeichnet, dass** die Dichtung (10) durch Formen aus Schaumstoff hergestellt wird.

4. Einheit nach Anspruch 2 oder 3, **dadurch gekennzeichnet, dass** das röhrenförmige Element (15) ein Teil aus Kunststoff ist, der angebaut und in den Schaumstoff im Augenblick des Formens der Dichtung (10) eingelassen wird.

5. Einheit nach Anspruch 2 oder 3, **dadurch gekennzeichnet, dass** das röhrenförmige Element (15) durch Formen aus Schaumstoff hergestellt wird.

6. Einheit nach Anspruch 5, **dadurch gekennzeichnet, dass** die Dichtung (10) und das röhrenförmige Element (15) bei ein und demselben Formvorgang hergestellt werden.

7. Kraftfahrzeug des Typs, das eine Windschutzscheibe (2) und ein Windlaufgitter (3) aufweist, **dadurch gekennzeichnet, dass** es mindestens eine Kanalisationseinheit für Wasser, das von der Windschutzscheibe (2) und dem Windlaufgitter (3) kommt, nach einem der vorhergehenden Ansprüche aufweist.
